# DEMANDE DE BREVET EUROPEEN

(11) **EP 1 630 388 A1**
(43) Date de publication de la demande: **01.03.2006**
(21) Numéro de dépôt: 05300593.0
(22) Date de dépôt: 13.07.2005
(51) Int. Cl.: F02D 41/02, F02D 41/34

(54) **Procédé de controle d'un moteur de véhicule équipé d'un pot catalytique**

(30) Priorité: 31.08.2004 FR 0451941
(71) Demandeur: Renault, 92109 Boulogne Billancourt (FR)
(72) Inventeur: BATISSON, Cathy, 78220, VIROFLAY (FR); VALENCIENNES, Edouard, 7515, PARIS (FR)
(74) Mandataire: Rougemont, Bernard

(57) **Abrégé**

Procédé de contrôle d'un moteur de véhicule équipé d'un pot catalytique, pour optimiser le fonctionnement du pot dans des phases particulières de répartition de la richesse du mélange air carburant entre les cylindres du moteur, caractérisé en ce que les objectifs de richesse visés pour chaque cylindre en phase de répartition de richesse sont différents selon que le moteur est au ralenti ou hors ralenti.

## Description

La présente invention concerne le contrôle moteur et la mise au point des moteurs, notamment à allumage commandé.

Plus précisément, elle porte sur le contrôle d'un moteur de véhicule équipé d'un pot catalytique, de manière à optimiser le fonctionnement du pot dans des phases particulières de répartition de la richesse du mélange air carburant entre les cylindres du moteur.

Cette invention propose en particulier une stratégie de contrôle moteur, mise en action pour assurer, dans les meilleures conditions, la dépollution des gaz d'échappement par répartition de richesse entre les cylindres du moteur.

De façon classique, on fait fonctionner certains cylindres d'un moteur en mélange pauvre et d'autres en mélange riche, pour amorcer ou optimiser la dépollution des gaz d'échappement dans un catalyseur, en agissant par les temps d'injection dans chaque cylindre. Ainsi, en réduisant les temps d'injection, on introduit en proportion plus d'oxygène dans les «cylindres pauvres » qu'à richesse un : les gaz d'échappement comportent alors plus de CO et d'H2, et la combinaison de ces gaz dans le catalyseur suffisamment chaud, permet de générer une réaction exothermique, qui élève encore la température du catalyseur, de manière à rendre celui-ci plus efficace. En revanche, les «cylindres riches», qui reçoivent plus de carburant, fournissent plus de couple

Le problème engendré par ces répartitions de richesse, est un déséquilibre du couple entre les cylindres riches et les cylindres pauvres, qui est ressenti désagréablement par les occupants du véhicule. Ces différences de couple peuvent être partiellement compensées par un ajustement de l'avance entre les cylindres riches et les cylindres pauvres, mais il subsiste généralement un déséquilibre qui peut « exciter » la caisse du véhicule, notamment dans le domaine des basses fréquences. Le phénomène est particulièrement sensible au ralenti à l'arrêt, situation où l'habitacle n'est plus soumis aux vibrations du roulage.

Par la publication US 5 661 971, on connaît une stratégie de contrôle moteur en phase de dépollution, reposant sur l'utilisation de répartitions de richesse particulières, pour accélérer la montée en température d'un catalyseur.

Selon cette publication, soit on supprime complètement la répartition de richesse pour éviter les désagréments liés à celle-ci en acceptant une baisse de l'efficacité catalytique, soit on adopte une configuration (nombre de cylindres riches, nombre de cylindres pauvres) favorable, selon le choix effectué, à l'agrément de conduite, ou à la vitesse de montée en température du catalyseur.

Une telle stratégie dégrade donc obligatoirement l'une ou l'autre de ces deux prestations dans la gestion de la dépollution.

L'invention a pour but de parvenir à un compromis entre l'agrément de conduite, et la vitesse de montée en température du catalyseur,

Dans ce but, elle propose que les objectifs de richesse visés pour chaque cylindre en phase de répartition de richesse soient différents selon que le moteur est au ralenti ou hors ralenti.

De préférence, les écarts de richesse entre les cylindres sont réduits au ralenti, et la richesse moyenne sur l'ensemble des cylindres est égale à un, en situation de ralenti et hors ralenti.

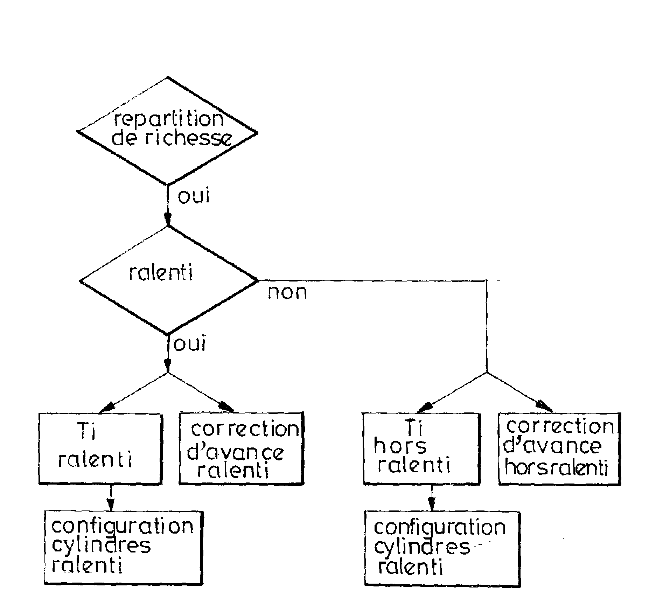

D'autres caractéristiques et avantages de l'invention apparaîtront clairement à la lecture de la description suivante d'un mode de réalisation de l'invention, en se reportant au dessin annexé, sur lequel la figure unique illustre le procédé mis en oeuvre.

La première étape de stratégie indiquée sur le schéma, est la vérification des conditions de répartition de richesse. Cette vérification est établie par un automate de dépollution, implanté par exemple au sein du calculateur moteur. Les paramètres analysés par cet automate incluent notamment, le compteur de points morts hauts (PMH), la température du liquide de refroidissement, etc.

Lorsque les conditions requises pour l'amorçage du catalyseur sont réunies, les conditions de régulation de ralenti sont analysées dans la deuxième étape de stratégie du schéma : les conditions de la phase ralenti peuvent être définies par exemple par l'absence d'appui sur la pédale d'accélérateur et par un régime inférieur à un seuil, qui peut dépendre lui même d'autres paramètres de fonctionnement moteur.

Ensuite, la phase de répartition de richesse est mise en action, c'est à dire que les corrections de richesse et d'avance sur chaque cylindre sont appliquées. Conformément, à l'invention ces corrections sont différentes selon que le moteur est au ralenti, ou est hors ralenti, ce qui signifie que les objectifs de richesse visés pour chaque cylindre sont différents dans les deux cas. La variable d'action ajustée pour atteindre ces objectifs de richesse est en principe les temps d'injection, qui peuvent être donc modifiés pour atteindre des objectifs de richesse différents au ralenti et hors ralenti dans chaque cylindre. Toutefois, sans sortir du cadre de l'invention, on peut envisager d'agir sur d'autres paramètres de la richesse, comme la quantité d'air admise dans le collecteur d'admission par commande d'un papillon motorisé ou d'une vanne additionnelle.

Comme indiqué sur le schéma, si le ralenti est détecté, le temps d'injection Ti dans chaque cylindre sera celui qui est requis pour atteindre les objectifs de richesse du cylindre au ralenti ; le nombre de cylindres « riches » et de cylindres « pauvres », sera aussi spécifique du ralenti, de même que les corrections d'avance à l'allumage par cylindre. Hors ralenti, les temps d'injection par cylindre, le nombre de cylindres riches et de cylindres pauvres, c'est à dire la configuration des cylindres, ainsi que les corrections d'avance seront également spécifiques.

Conformément à l'invention, une étape de détermination des conditions de ralenti est donc intégrée dans le procédé de contrôle des temps d'injection en phase de répartition de richesse, de même que dans la détermination du nombre de cylindres riches et de cylindres pauvres, et dans l'application des corrections d'avance à l'allumage.

Concernant le nombre de cylindres « riches » et de cylindres « pauvres », on peut considérer qu'un mode de réalisation particulièrement avantageux de l'invention pour un moteur à quatre cylindres, consiste à avoir en phase de répartition de richesse trois cylindres pauvres et un cylindre riche hors ralenti, pour deux cylindres pauvres et deux cylindres riches au ralenti. Toutefois ces dispositions privilégiées n'ont aucun caractère limitatif quant au nombre de cylindres riches et de cylindres pauvres dans les deux situations.

Grâce à l'invention, on peut choisir des valeurs de richesse cible pour les cylindres riches et pour les cylindres pauvres et une configuration (nombre de cylindres riches, nombre de cylindres pauvres) optimales pour l'agrément du véhicule au ralenti, tout en conservant hors ralenti, une configuration et des réglage optimisés pour garantir la pleine efficacité du catalyseur.

En phase de répartition de richesse active, les temps d'injection calculés pour obtenir la richesse un, peuvent avantageusement être multipliés, cylindre par cylindre, par l'objectif de richesse desdits cylindres. Ces objectifs de richesse sont calibrables. L'invention propose donc d'introduire, par exemple dans le calcul des temps d'injection, des calibratians d'objectif spécifiques au ralenti.

Cette disposition permet de choisir une configuration (nombre de cylindres riches, nombre de cylindres pauvres) optimale pour le fonctionnement au ralenti, normalement différente de la configuration optimale pour la gérer la température catalyseur hors ralenti. Ainsi, lorsque les conditions de régulation au ralenti sont détectées, on change de facteur multiplicatif, en passant des objectifs de richesse hors ralenti, à ceux spécifiques au ralenti. Les amplitudes de richesse entre les différents cylindres sont alors modifiées. Ces amplitudes sont réduites au ralenti, car l'agrément du véhicule au ralenti est d'autant plus dégradé au ralenti que les amplitudes de richesses entre les cylindres sont élevées. Dans la pratique, on peut sans inconvénient conserver au ralenti les mêmes amplitudes, lorsque que le véhicule roule, et lorsqu'il est arrêté.

L'indépendance des choix de consigne de richesse sur chaque cylindre du moteur permet en particulier de choisir une configuration, propre à conserver sur l'ensemble des cylindres une richesse moyenne égale à un. Dans le cas d'un moteur à quatre cylindres on peut ainsi faire fonctionner au ralenti deux cylindres en mélange riche et deux cylindres en mélange pauvre, car cette configuration est favorable à l'agrément, et adopter une autre configuration hors ralenti, par exemple trois cylindres en mélange pauvre et un cylindre en mélange riche.

En variante, on peut conserver en permanence la configuration trois cylindres pauvres et un cylindre riche, en mélange riche, en ne différenciant le ralenti que par une réduction de l'écart entre la richesse des cylindres pauvres et celle du cylindre riche.

Comme les ajustements de couple par correction de l'avance à l'allumage, cylindre à cylindre, sont fonction de la richesse de chaque cylindre, l'invention propose également de créer pour ces corrections, des calibrations spécifiques, associées aux phases de répartitions de richesse au ralenti.

Enfin, on peut prévoir de limiter l'application des mesures proposées par l'invention aux phases d'amorçage du catalyseur

En résumé, l'automate de mise en action de la dépollution détermine en permanence si les conditions de mise en action de la répartition de richesse sont réunies. Lorsque la phase d'amorçage du catalyseur par répartition de richesse active doit être déclenchée, des corrections de richesse (et d'avance associées) sont appliquées. Si l'automate de régulation de ralenti détermine que l'on est au ralenti, les corrections de richesse et d'avance sont spécifiques au ralenti, sinon les corrections appliquées sont celles dédiées au reste de la zone de fonctionnement du moteur. Enfin, les corrections sont maintenues, tant que les conditions de répartition de richesse sont maintenues.

En conclusion, l'invention propose une stratégie de contrôle moteur particulière, qui est mise en action pour assurer dans les meilleures conditions la dépollution des gaz d'échappement par répartition de richesse entre les cylindres du moteur.

## Revendications

1. Procédé de contrôle d'un moteur de véhicule équipé d'un pot catalytique, pour optimiser le fonctionnement du pot dans des phases particulières de répartition de la richesse du mélange air carburant entre les cylindres du moteur, **caractérisé en ce que** les objectifs de richesse visés pour chaque cylindre en phase de répartition de richesse sont différents selon que le moteur est au ralenti ou hors ralenti et **en ce que** les écarts de richesse entre les cylindres sont réduits au ralenti.

2. Procédé de contrôle selon la revendication 1, **caractérisé en ce** la richesse moyenne sur l'ensemble des cylindres est égale à un en situation de ralenti et hors ralenti.

3. Procédé de contrôle selon la revendication 1 ou 2, **caractérisé en ce que** le nombre de cylindres pauvres hors ralenti est égal à trois, tandis que le nombre de cylindres riches est égal à un.

4. Procédé de contrôle selon la revendication 2 ou 3, **caractérisé en ce que** le nombre de cylindres riches au ralenti est égal au nombre de cylindres pauvres.

5. Procédé de contrôle selon la revendication 2 ou 3, **caractérisé en ce que** le nombre de cylindres pauvres au ralenti est égal à trois, tandis que le nombre de cylindres riches est égal à un.

6. Procédé de contrôle selon la revendication 5, **caractérisé en ce que** le ralenti est différencié du reste de la zone de fonctionnement du moteur uniquement par une réduction de l'écart entre les cylindres riches et les cylindres pauvres.

7. Procédé de contrôle selon l'une des revendications précédentes, **caractérisé en ce que** les corrections d'avance à l'allumage sur chaque cylindre sont adaptées à la situation de ralenti et hors ralenti.

8. Procédé de contrôle selon la revendication 7, **caractérisé en ce que** la répartition de la richesse entre les cylindres du moteur est adaptée aux objectifs de richesse de chaque cylindre en agissant sur les temps d'injection de carburant dans chacun d'eux.

9. Procédé de contrôle selon l'une des revendications précédentes, **caractérisé en ce que** les temps d'injection dans chaque cylindre en phase de répartition de richesse pour obtenir la richesse un, sont multipliés par l'objectif de richesse du cylindre.

10. Procédé selon l'une des revendications précédentes, **caractérisé en ce que** son application est limitée aux phases d'amorçage du pot catalytique.
